# EUROPÄISCHE PATENTANMELDUNG

(11) **EP 2 003 023 A2**
(43) Veröffentlichungstag der Anmeldung: **17.12.2008**
(21) Anmeldenummer: 08002319.5
(22) Anmeldetag: 08.02.2008
(51) Int. Cl.: B60R 21/13

(54) **Kraftfahrzeug mit einem beweglichen Dach und einem ausfahrbaren Überrollschutzelement**

(30) Priorität: 16.06.2007 DE 102007027740
(71) Anmelder: Dr. Ing. h.c. F. Porsche Aktiengesellschaft, 70435 Stuttgart (DE)
(72) Erfinder: Beierl, Dominik, 70825 Korntal-Münchingen (DE); Hermann, Felix, 71229 Leonberg (DE)

(57) **Zusammenfassung**

Die Erfindung betrifft ein Kraftfahrzeug (1) mit einem Aufbau (3), einem zwischen einer Öffnungs - und Schließstellung verstellbaren Dach (5), das eine Dachhaut (13) mit einem Heckfenster (16) aufweist, und mit einem aus einer Ruhestellung in eine Schutzstellung (ZT) ausfahrbaren Überrollschutzelement (21), das in der Schutzstellung (ZT) und bei in Schließstellung (ST) vorliegendem Dach (5) die Dachhaut (13) nahe dem Heckfenster (16) überragt.

Für einen verbesserten Überrollschutz wird vorgeschlagen, dass das Heckfenster (16) von einem steifen Fensterrahmen (35) zumindest abschnittweise umgeben und daran befestigt ist und dass der Fensterrahmen (35) in der Schließstellung (ST) des Dachs (5) gegenüber dem Aufbau (3) abgestützt ist.

## Beschreibung

Bei der Erfindung wird ausgegangen von einem Kraftfahrzeug mit einem beweglichen Dach und einem ausfahrbaren Überrollschutzelement, gemäß Oberbegriff des Anspruchs 1.

Ein gattungsbildendes Kraftfahrzeug ist aus der DE 10 2004 062 999 A1 bekannt. Es weist ein bewegliches Dach in Form eines Verdeckes auf, in dessen Dachhaut ein Heckfenster eingesetzt ist. Ferner besitzt das Kraftfahrzeug ein Überrollschutzelement, das als zumindest ein hinter einem Fahrzeugsitz angeordneter Überrollbügel ausgebildet ist. Der Überrollbügel ist ausfahrbar von einer versenkten bzw. eingefahrenen Ruhestellung in eine ausgefahrene, die Gürtellinie des Kraftfahrzeugs überragenden Schutzstellung in einer Aufnahmekassette gehalten. Bei in Schließstellung angeordnetem Dach fährt der Überrollbügel so weit aus, dass er die Dachhaut bzw. das Heckfenster durchbricht, wodurch die Ausfahrhöhe des Überrollbügels unabhängig von der Stellung des Verdecks gewählt werden kann.

Aufgabe der Erfindung ist es, ein Kraftfahrzeug der eingangs genannten Art hinsichtlich des Überrollschutzes zu verbessern.

Gelöst wird diese Aufgabe mit einem Kraftfahrzeug, das die in Anspruch 1 genannten Merkmale aufweist. Weitere Ausgestaltungen der Erfindung sind in den Unteransprüchen enthalten.

Die mit der Erfindung hauptsächlich erzielten Vorteile sind darin zu sehen, dass unabhängig von der Stellung des Daches (Öffnungs - oder Schließstellung) für den/die Fahrzeuginsassen ein vergrößerter Schutzbereich bereitgestellt werden kann. Die Ausfahrhöhe des Überrollschutzelements wird also unabhängig von der Dachstellung optimal, jedoch gleich bleibend gewählt. Darüber wird durch den erfindungsgemäßen Fensterrahmen dem ausfahrenden Überrollschutzelement ein konstanter, nicht wegfedernder bzw. ausweichender Widerstand entgegengestellt, der das Durchbrechen der Dachhaut, insbesondere des Heckfensters, durch das Überrollschutzelement begünstigt. Dies wird erfindungsgemäß weiter dadurch verbessert, dass das Überrollschutzelement die Dachhaut bzw. das Heckfenster nahe am Fensterrahmen durchbricht. Das Heckfenster bzw. die Dachhaut kann also beim Auftreffen des ausfahrenden Überrollschutzelements nicht wegfedern bzw. ausweichen.

In bevorzugten Ausführungsformen wird der Fensterrahmen an dem Aufbau und/oder an einem Verdeckgestänge des Dachs beweglich gehalten, beispielsweise gelenkig über eine Hebelanordnung, die sich zwischen dem Fensterrahmen und dem Aufbau und/oder dem Verdeckgestänge erstreckt. Besonders bevorzugt wird eine Ausführungsform, bei der der Fensterrahmen zumindest teilweise an einem Spannbügel des Verdeckgestänges beweglich gehalten ist.

Es kann also vorgesehen sein, dass das Überrollschutzelement einen undurchsichtigen Abschnitt der Dachhaut oder einen durchsichtigen Abschnitt, nämlich das Heckfenster, durchstößt, oder das Heckfenster aus der Dachhaut bzw. aus dem Fensterrahmen zumindest teilweise herauslöst bzw. heraustrennt. Dafür ist in bevorzugter Ausführungsform das Heckfenster mit einer Sollbruchstelle ausgestattet, die eine Zerstörung des Heckfensters weiter begünstigt, und/oder das Heckfenster ist über eine Sollbruchstelle in der Dachhaut bzw. an dem Fensterrahmen gehalten.

Um die Zerstörung des Heckfensters bzw. das Durchstoßen der Dachhaut weiterhin günstig zu beeinflussen, wird in einem bevorzugten Ausführungsbeispiel das Überrollschutzelement mit einem Durchstoßelement, insbesondere Dorn, ausgerüstet.

Das bewegliche Dach ist in einem weiteren Ausführungsbeispiel als Verdeck mit einem flexiblen Verdeckstoff ausgeführt, welcher zusammen mit dem eingefassten Heckfenster die Dachhaut bilden kann. Denkbar wäre es jedoch, das Dach als ein Klappdach auszuführen, welches eine feste Dachhaut, beispielsweise aus Blech, aufweist, in die das Heckfenster mit seinem Fensterrahmen eingesetzt ist.

Die Erfindung wird nachfolgend anhand von Ausführungsbeispielen mit Bezug auf die Zeichnung näher erläutert. Es zeigen:
- Fig. 1 bis 3: in verschiedenen Ansichten in einem ersten Ausführungsbeispiel ein Dach eines Kraftfahrzeugs mit einem Überrollschutzelement,
- Fig. 4 bis 6: in verschiedenen Ansichten in einem zweiten Ausführungsbeispiel ein Dach eines Kraftfahrzeugs mit einem Überrollschutzelement und
- Fig. 7: eine Detailansicht des Dachs.

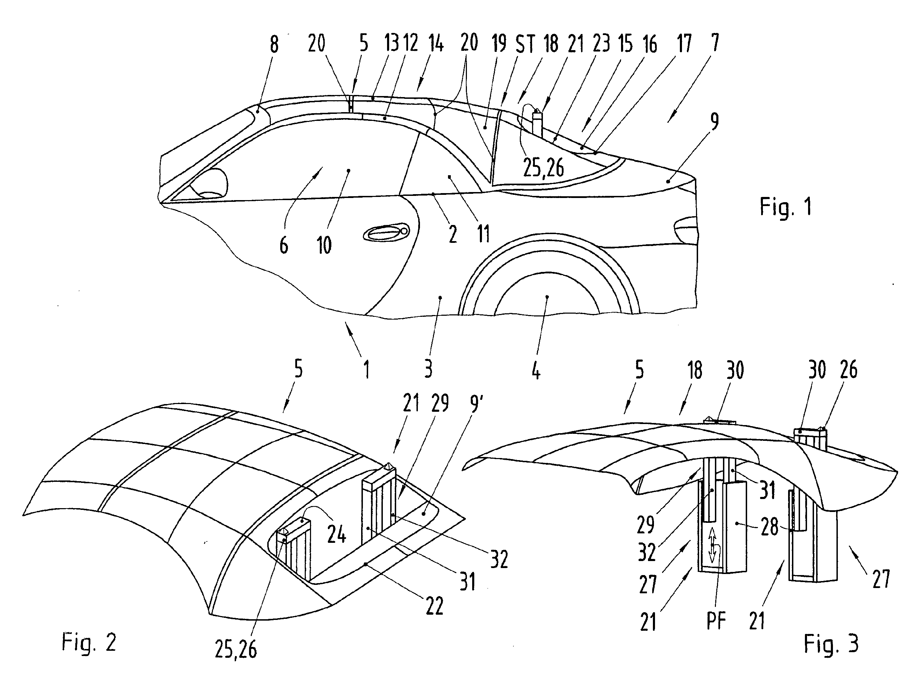

Fig. 1 zeigt in einer Seitenansicht teilweise ein Kraftfahrzeug 1, insbesondere Cabriolet, mit einem eine Gürtellinie 2 aufweisenden Aufbau 3, der von einem Fahrwerk mit Rädern getragen wird, von denen lediglich ein Rad 4 gezeigt ist. Oberhalb der Gürtellinie 2 ist in Schließstellung ST ein bewegliches bzw. verstellbares Dach 5 angeordnet, das bogenartig einen Fahrgastraum 6 von einem Heckbereich 7 bis zu einem oberen Windlauf 8 überspannt und das im Heckbereich 7 in einer Öffnungsstellung (nicht dargestellt) in einem unter einem bewegbaren Verdeckkastendeckel 9 angeordneten Verdeckkasten 9' (Fig. 2) ablegbar ist. Seitlich oberhalb der Gürtellinie 2 wird der Fahrgastraum 6 noch von bewegbaren Seitenscheiben 10 bzw. 11 begrenzt, die in ihrer angehobenen Stellung an einen seitlichen Dachrahmen 12 des Daches 5 heranreichen.

Das Dach 5 besitzt eine außen liegende Dachhaut 13, die einen ersten undurchsichtigen Abschnitt 14 und, insbesondere nahe des Heckbereichs 7, einen zweiten, durchsichtigen Abschnitt 15 umfasst. Der zweite Abschnitt 15 wird insbesondere von einem in die Dachhaut 13 eingesetzten Heckfenster 16 gebildet, das als starre Scheibe ausgeführt ist, die in einen Ausschnitt 17 in der Dachhaut 13 eingesetzt ist. Vorzugsweise ist das Dach 5 als Cabriolet - Verdeck 18 ausgeführt und weist als ersten Abschnitt 14 einen flexiblen Verdeckbezug 19 auf, der von einem hier nur teilweise zu sehenden Verdeckgestänge 20 getragen wird, dem auch der Dachrahmen 12 zugeordnet ist.

Im Fahrgastraum 6 ist hinter hier nicht gezeigten Fahrzeugsitzen und vor dem Verdeckkasten 9' zumindest ein Überrollschutzelement 21 angeordnet, das von einer nicht gezeigten eingefahrenen Ruhestellung in eine ausgefahrene Schutzstellung ZT verlagert werden kann, in der es die Gürtellinie 2 überragt. Die Ruhestellung kann unter bzw. nahe der Gürtellinie 2 liegen. In der Schutzstellung ZT hat das Überrollschutzelement 21 die Dachhaut 13 durchdrungen und überragt somit diese, wie dies in den verschiedenen Ansichten in den Fig. 1 bis 3 dargestellt ist. Insbesondere ist das Überrollschutzelement 21 in Ruhestellung unterhalb des durchsichtigen Abschnitts 15 angeordnet und durchdringt dessen Ebene 22 zum Erreichen der Schutzstellung ZT, in welcher Ebene 22 das Heckfenster 16 liegt. Um die Schutzstellung ZT einnehmen zu können, durchbricht das Überrollschutzelement 21 die Dachhaut 13, beispielsweise das Heckfenster 16, durch zumindest teilweise Zerstörung der Dachhaut 13, insbesondere des Heckfensters 16, das somit aus dem undurchsichtigen ersten Abschnitt 14 der Dachhaut 13 herausgelöst wird. Um das Durchbrechen des Heckfensters 16 zu erleichtern, kann dieses eine Sollbruchstelle 23 aufweisen, die durch eine Materialschwächung im Fensterglas (vorzugsweise Einscheibensicherheitsglas) gebildet wird. Für das Zerstören des Heckfensters 16, allgemein zum Durchbrechen der Dachhaut, kann das Überrollschutzelement 21 an seiner der Dachhaut 13 zugewandten Oberseite 24 ein punktförmiges, lokal angebrachtes Durchstoßelement 25 aufweisen, das als Dorn 26 ausgeführt sein kann und vorzugsweise so weit wie möglich außen oder innen an dem Überrollschutzelement 21 angebracht ist, dass es auch ein gewölbt ausgeführtes Heckfenster 16 trifft.

Wie aus den Fig. 2 und 3 ersichtlich, können zwei nebeneinander angeordnete Überrollschutzelemente 21 in das Kraftfahrzeug 1 eingesetzt sein. Jedes der Elemente 21 ist als Kassette 27 mit einem Befestigungs- und Führungsrahmen 28 und einem darin höhenverlagerbar (Pfeil PF) geführten Überrollbügel 29 mit einer Basis 30 (Oberseite 24) und zwei Führungsschenkeln 31 und 32 ausgebildet. Damit der Überrollbügel 29 in die Schutzstellung ZT verfahren werden kann, ist für eine Auslösesteuerung des in Ruhestellung gehaltenen Überrollbügels 29 ein nicht dargestellter Sensor mit einem entsprechenden Steuergerät vorgesehen. Sensor und Steuergerät erkennen einen beginnenden Überrollvorgang des Kraftfahrzeugs 1 und geben den vorzugsweise in Richtung Schutzstellung ZT vorgespannten Überrollbügel 29 über eine Auslösemechanik frei. Sensor, Steuergerät und Auslösemechanik sind jedoch bekannt, so dass auf deren weitere Beschreibung verzichtet wird.

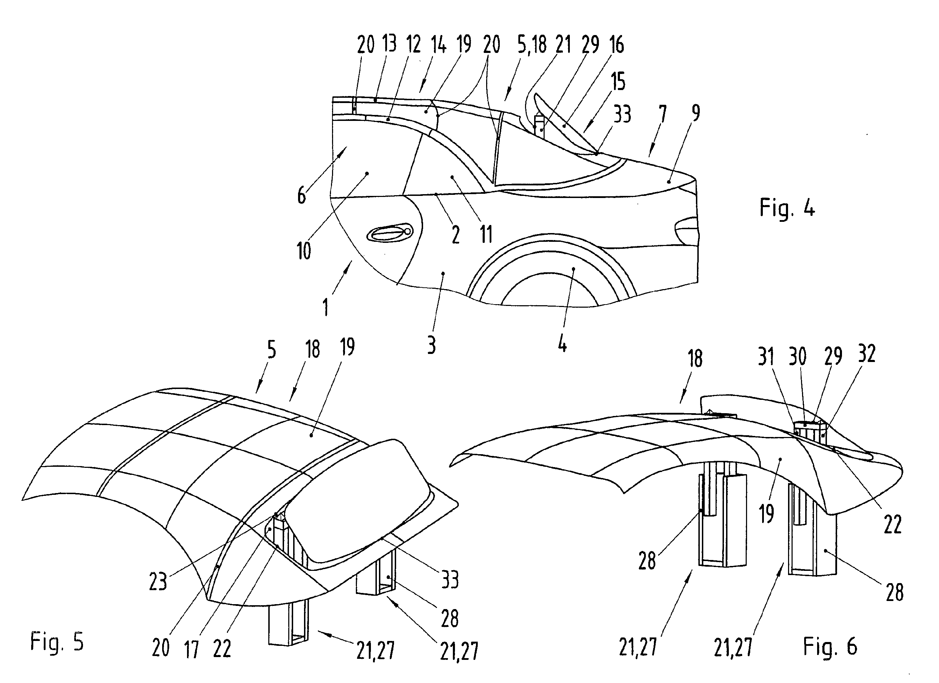

Anhand der Fig. 4 bis 6 wird ein zweites Ausführungsbeispiel eines Daches 5 beschrieben. Gleiche bzw. gleich wirkende Teile sind mit denselben Bezugszeichen wie in den Fig. 1 bis 3 versehen und umgekehrt. Die Sollbruchstelle 23 liegt zwischen Heckfenster 16 und dem ersten undurchsichtigen Abschnitt 14 der Dachhaut 13. Das Heckfenster 16 ist in die Dachhaut 13 eingesetzt, was in den Fig. 3 bis 6 nicht dargestellt ist; jedenfalls liegt das Heckfenster 16 in seiner Normalstellung in der Ebene 22. Die Sollbruchstelle 23 kann an dem Ausschnitt 17 umlaufend oder lediglich teilweise ausgeführt sein, so dass ein Aufklappen des Heckfensters 16 um ein Klappachse 33 möglich ist, damit das Überrolischutzelement 21 in seine Schutzstellung ZT gebracht werden kann, ohne das Heckfenster 16 zu zerstören; denkbar wäre jedoch auch eine Kombination von Zerstörung und Heraustrennung des Heckfensters 16. Unabhängig davon, durchbricht das Überrollschutzelement 21 auch nach dem zweiten Ausführungsbeispiel die Ebene 22 des Heckfensters 16, so dass es die Dachhaut 13 überragen kann, wenn es in die Schutzstellung ZT bewegt wird.

Bei geöffnetem Dach 5 (nicht gezeigt) wird das Überrolischutzelement 21 in dieselbe Schutzstellung ZT verlagert, also in identische Ausfahrhöhe gebracht. Unabhängig von der Stellung des Daches 5 wird unterhalb einer gedachten Tangente an Windlauf 8 und Oberseite 24 des Überrollschutzelements 21 ein erweiterter Schutzbereich für den/die Insassen des Kraftfahrzeugs 1 bereitgehalten.

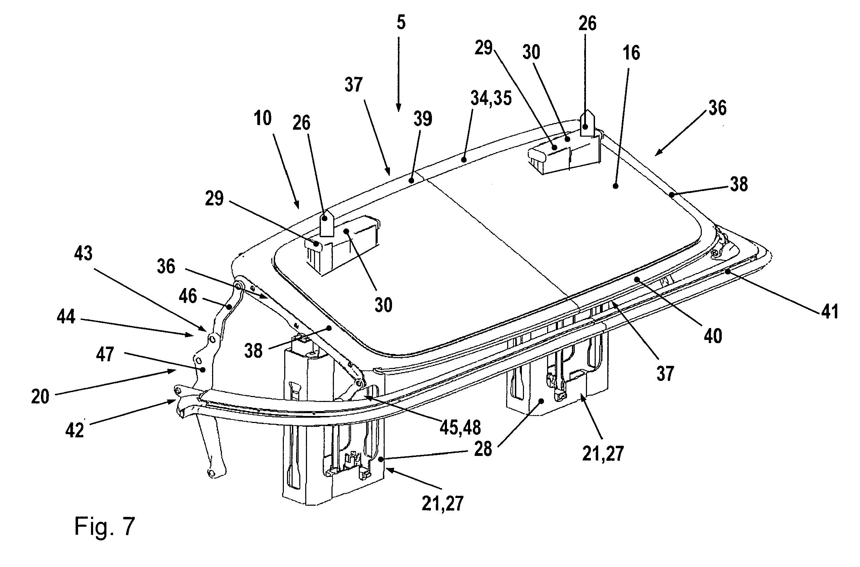

Unabhängig von den vorstehend beschriebenen Ausführungsbeispielen ist das dargestellte Dach 5 in jedem Fall mit einem steifen bzw. unnachgiebigen Rahmenelement 34 (Fig. 7) ausgestattet, das die Dachhaut 13 in einem Abschnitt, hier der durchsichtige Abschnitt 15, unterstützt. Unterhalb dieses zu durchbrechenden Abschnitts liegt das Überrollschutzelement 21, das den Abschnitt zum Erreichen der Schutzstellung ZT nahe an dem Rahmenelement 34 durchbricht. Im gezeigten Ausführungsbeispiel ist das Rahmenelement 34 ein das Heckfenster 16 einfassender Fensterrahmen 35, der das Heckfenster 16 umlaufend oder lediglich teilweise umgibt. Das Heckfenster 16 ist an dem Fensterrahmen 35 befestigt. Der Verdeckbezug 19 kann ebenfalls an dem Rahmenelement 34 bzw. 35 befestigt sein. Im Ausführungsbeispiel ist der etwa rechtwinklige Fensterrahmen 35 umlaufend mit zwei Schmalseiten 36 und zwei Längsseiten 37 ausgeführt und weist entsprechend seitliche Rahmenschenkel 38 sowie einen oberen und unteren Rahmenschenkel 39 und 40 auf.

Das Verdeckgestänge 20 umfasst neben hier nicht dargestellten Elementen zum Bewegen des Dachs 5 zwischen der Öffnungs- und Schließstellung zumindest noch einen heckseitigen, U-förmigen Abschluss, insbesondere Spannbügel 41, der mit seinen Enden 42 an dem Verdeckgestänge 20 und/oder an dem Aufbau 3 beweglich gehalten ist. Das Überrollschutzelement 21 ist am Aufbau 3 befestigt.

Das Rahmenelement 34 bzw. der Fensterrahmen 35 ist in der Schließstellung ST des Dachs 5 gegenüber dem Aufbau 3 derart abgestützt, dass er gegenüber dem Überrollschutzelement 21 nicht ausweichen bzw. wegfedern kann, wenn das Überrollschutzelement 21 auf den zu durchbrechenden Abschnitt der Dachhaut 13 trifft. In einem Ausführungsbeispiel kann das Rahmenelement 34 direkt am Aufbau 3 (beispielsweise an einem nicht gezeigten Verdecklager) beweglich gehalten sein, wofür an jeder Schmalseite 36 zumindest ein Gestänge 43 und/oder Gelenk vorgesehen ist. Bevorzugt umfasst das Gestänge 43 eine vordere und/oder hintere Hebelanordnung 44, 45, die zumindest einen Hebel 46 oder 47 oder 48 besitzt und die sowohl mit dem Aufbau 3 und dem Rahmenelement 34 gelenkig verbunden ist, so dass das Rahmenelement 34 zum Erreichen der Öffnungsstellung des Dachs 5 mit abgelegt werden kann, wie es für Cabriolets üblich ist. Die vordere Hebelanordnung 44 ist nahe am oberen Rahmenschenkel 39 gelenkig mit dem Rahmenelement 34 verbunden und beispielsweise mit einem Hebel oder gelenkig miteinander verbundenen Hebeln 46, 47 ausgeführt. Die hintere Hebelanordnung 45 umfasst insbesondere einen einzigen Hebel 48, der nahe an dem unteren Rahmenschenkel 40 gelenkig mit dem Rahmenelement 34 verbunden ist.

Alternativ kann - wie Fig. 7 zeigt - das Rahmenelement 34 über das zuvor beschriebene Gestänge 43 an dem Verdeckgestänge 20 beweglich gehalten sein. Dabei erstreckt sich die hintere Hebelanordnung 45 zwischen dem Rahmenelement 34 und dem Spannbügel 41, während die vordere Hebelanordnung 44 zwischen dem Rahmenelement 34 und einem anderen Element des Verdeckgestänges 20 oder dem Aufbau 3 angeordnet ist; denkbar wäre, die vordere Hebelanordnung 44 mit dem Spannbügel 41 beweglich zu verbinden. Jedenfalls verhindert das Gestänge 43, dass das ausfahrende Überrollschutzelement 21 das Rahmenteil lediglich wegdrückt ohne dabei die Dachhaut 13 zu durchbrechen.

## Patentansprüche

1. Kraftfahrzeug (1) mit einem Aufbau (3), einem zwischen einer Öffnungs - und Schließstellung verstellbaren Dach (5), das eine Dachhaut (13) mit einem Heckfenster (16) aufweist, und mit einem aus einer Ruhestellung in eine Schutzstellung (ZT) ausfahrbaren Überrollschutzelement (21), das in der Schutzstellung (ZT) und bei in Schließstellung (ST) vorliegendem Dach (5) die Dachhaut (13) nahe dem Heckfenster (16) überragt, **dadurch gekennzeichnet, dass** das Heckfenster (16) von einem steifen Fensterrahmen (35) zumindest abschnittweise umgeben und daran befestigt ist und dass der Fensterrahmen (35) in der Schließstellung (ST) des Dachs (5) gegenüber dem Aufbau (3) abgestützt ist.

2. Kraftfahrzeug nach Anspruch 1, **dadurch gekennzeichnet, dass** der Fensterrahmen (35) an dem Aufbau (39 beweglich gehalten ist.

3. Kraftfahrzeug nach Anspruch 1 oder 2, **dadurch gekennzeichnet, dass** der Fensterrahmen (35) an einem Verdeckgestänge (20) beweglich gehalten ist.

4. Kraftfahrzeug nach Anspruch 3, **dadurch gekennzeichnet, dass** das Verdeckgestänge (20) einen Spannbügel (41) aufweist, an dem der Fensterrahmen (35) beweglich gehalten ist.

5. Kraftfahrzeug nach einem der vorhergehenden Ansprüche, **dadurch gekennzeichnet, dass** der Fensterrahmen (35) sowohl nahe an einem oberen als auch unteren Rahmenschenkel (39, 40) mit einer Hebelanordnung (43) gegenüber dem Aufbau (3) abgestützt ist.

6. Kraftfahrzeug nach einem der vorhergehenden Ansprüche, **dadurch gekennzeichnet, dass** in der Dachhaut (5) des Daches (5) ein Heckfenster (16) angeordnet ist und dass das Überrollschutzelement (21) in seiner Schutzstellung (ZT) die Ebene (22) des Heckfensters (16) durchstößt.

7. Kraftfahrzeug nach Anspruch 6, **dadurch gekennzeichnet, dass** das Überrollschutzelement (21) bei seiner Bewegung von der Ruhestellung in die Schutzstellung (ZT) das Heckfenster (16) zumindest teilweise zerstört.

8. Kraftfahrzeug nach Anspruch 6, **dadurch gekennzeichnet, dass** das Überrollschutzelement (21) bei seiner Bewegung von der Ruhestellung in die Schutzstellung (ZT) das Heckfenster (16) zumindest teilweise aus der Dachhaut (13), insbesondere aus dem Fensterrahmen (35), heraustrennt.

9. Kraftfahrzeug nach einem der vorhergehenden Ansprüche, **dadurch gekennzeichnet, dass** es als Cabriolet ausgebildet ist und das bewegliche Dach (5) oberhalb einer Gürtellinie (2) des Aufbaues (3) des Cabriolets angeordnet ist.

10. Kraftfahrzeug nach Anspruch 9, **dadurch gekennzeichnet, dass** das bewegliche Dach (5) durch ein Verdeck (18) mit einem die Dachhaut (13) darstellenden Verdeckbezug (19) gebildet ist.

11. Kraftfahrzeug nach einem der vorhergehenden Ansprüche, **dadurch gekennzeichnet, dass** das Überrollschutzelement (21) ein Durchstoßelement (25) an seiner der Dachhaut (13) zugewandten Oberseite (24) aufweist.

12. Kraftfahrzeug nach einem der vorhergehenden Ansprüche, **dadurch gekennzeichnet, dass** das Heckfenster (16) eine Sollbruchstelle (23) aufweist oder über eine Sollbruchstelle (23) in der Dachhaut (13), insbesondere an dem Fensterrahmen (35), gehalten ist.
